(19) Europäisches Patentamt European Patent Office Office européen des brevets

(11) **EP 4 694 004 A1**

(12) **EUROPEAN PATENT APPLICATION**
published in accordance with Art. 153(4) EPC

(43) Date of publication:
**11.02.2026   Bulletin 2026/07**

(21) Application number: **24784427.7**

(22) Date of filing: **07.04.2024**

(51) International Patent Classification (IPC):
*H04L 5/00* *(2006.01)*

(52) Cooperative Patent Classification (CPC):
Y02D 30/70

(86) International application number:
**PCT/CN2024/086341**

(87) International publication number:
**WO 2024/208345 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **07.04.2023   CN 202310372208**

(71) Applicant: **Vivo Mobile Communication Co., Ltd. Dongguan, Guangdong 523863 (CN)**

(72) Inventor: **LIU, Xuanbing Dongguan, Guangdong 523863 (CN)**

(74) Representative: **dompatent Partnerschaft von Patentanwälten und Rechtsanwälten mbB Deichmannhaus am Dom Bahnhofsvorplatz 1 50667 Köln (DE)**

(54)   **PAGING METHOD AND COMMUNICATION DEVICE**

(57)   The present application belongs to the technical field of communications. Disclosed are a paging method and a communication device. The paging method in the embodiments of the present application comprises: a first communication device receiving paging-related information sent by a second communication device, wherein the paging-related information is used for assisting the first communication device in paging a terminal by means of a low-power wake-up signal (LP-WUS), the LP-WUS is used for bearing a paging message, or the LP-WUS is used for instructing the terminal to receive a paging message sent by a network-side device.

A first communication device receives paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device

101

FIG. 2

**Description**

**CROSS-REFERENCE TO RELATED APPLICATIONS**

This application claims priority to Chinese patent application No. 202310372208.5, filed on April 7, 2023 and entitled "PAGING METHOD AND COMMUNICATION DEVICE", which is incorporated herein by reference in its entirety.

**TECHNICAL FIELD**

This application belongs to the field of communication technologies, and in particular, to a paging method and a communication device.

**BACKGROUND**

When a network side device (such as a base station) needs to communicate with a terminal, a paging (Paging) message may be first transmitted to the terminal. After receiving the paging message, the terminal may establish a communication connection with the network side device if it is determined to respond to the paging message.

To reduce receiving activities of the terminal in a standby state, and enable radio frequency and baseband modules to be actually disabled, thereby greatly reducing power consumption of communication reception, a low power wake-up receiver (Low Power Wake-Up Receiver, LP-WUR) is introduced into a new radio (New Radio, NR) system. A receiving module of the terminal includes a first module and a second module. The first module is a main communication module and is used for transmitting and receiving of mobile communication data, and the second module is a low power wake-up receiving module and is used for receiving a low power wake-up signal (Low Power Wake-Up Signal, LP-WUS). In an energy-saving state, the terminal enables the low power receiving module to monitor the LP-WUS and disables the main communication module.

Therefore, for a person skilled in the art, how to implement a paging scheme in a low power consumption scenario is the problem that needs to be resolved in this application.

**SUMMARY**

Embodiments of this application provide a paging method and a communication device, which can resolve the problem of how to implement a paging scheme in a low power consumption scenario.

According to a first aspect, a paging method is provided, and the method includes:

receiving, by a first communication device, paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a second aspect, a paging method is provided, and the method includes:

transmitting, by a second communication device, paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a third aspect, a paging apparatus is provided, including:

a receiving module, configured to receive paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a fourth aspect, a paging apparatus is provided, including:

a transmitting module, configured to transmit paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a fifth aspect, a first communication device is provided. The first communication device includes a processor and a memory, the memory stores a program or an instruction that can be run on the processor, and when the program or the instruction is executed by the processor, the steps of the method according to the first aspect are implemented.

According to a sixth aspect, a first communication device is provided, including a processor and a communication interface. The communication interface is configured to receive paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a seventh aspect, a second communication device is provided. The first communication device includes a processor and a memory, the memory stores a program or an instruction that can be run on the processor, and when the program or the instruction is executed by the processor, the steps of the method according to the first aspect are implemented.

According to an eighth aspect, a second communication device is provided, including a processor and a communication interface. The communication interface is configured to transmit paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

According to a ninth aspect, a readable storage medium is provided. The readable storage medium stores a program or an instruction, and when the program or the instruction is executed by a processor, the steps of the method according to the first aspect are implemented, or the steps of the method according to the second aspect are implemented.

According to a tenth aspect, a wireless communication system is provided, including a first communication device and a second communication device, where the first communication device may be configured to perform the steps of the method according to the first aspect, and the second communication device may be configured to perform the steps of the method according to the second aspect.

According to an eleventh aspect, a chip is provided. The chip includes a processor and a communication interface, the communication interface is coupled to the processor, and the processor is configured to run a program or an instruction to implement the method according to the first aspect or the method according to the second aspect.

According to a twelfth aspect, a computer program/program product is provided, where the computer program/program product is stored in a storage medium, and the program/program product is executed by at least one processor to implement the steps of the paging method according to the first aspect or the second aspect.

According to the method of this application, the first communication device receives paging-related information transmitted by the second communication device, where the paging-related information is used for assisting the first communication device in paging the terminal by using a low power wake-up signal (LP-WUS), and the LP-WUS is used for carrying a paging message, or the LP-WUS indicates the terminal to receive a paging message transmitted by the network side device. The terminal may receive the LP-WUS by using the low power wake-up receiving module, thereby reducing energy consumption and achieving the purpose of power saving.

BRIEF DESCRIPTION OF DRAWINGS

FIG. 1A is a schematic architectural diagram of a wireless communication system according to an embodiment of the present invention;
FIG. 1B is a schematic diagram of a principle of a low power wake-up receiver according to an embodiment of this application;
FIG. 2 is a first schematic flowchart of a paging method according to an embodiment of this application;
FIG. 3A is a first schematic diagram of an interaction procedure of a paging method according to an embodiment of this application;
FIG. 3B is a second schematic diagram of an interaction procedure of a paging method according to an embodiment of this application;
FIG. 3C is a third schematic diagram of an interaction procedure of a paging method according to an embodiment of this application;
FIG. 4 is a second schematic flowchart of a paging method according to an embodiment of this application;
FIG. 5 is a first schematic diagram of a structure of a paging apparatus according to an embodiment of this application;
FIG. 6 is a second schematic diagram of a structure of a paging apparatus according to an embodiment of this application;
FIG. 7 is a schematic diagram of a structure of a communication device according to an embodiment of this application;
FIG. 8 is a first schematic diagram of a structure of a network side device according to an embodiment of this application; and
FIG. 9 is a second schematic diagram of a structure of a network side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

Terms such as "first" and "second" in this application are used to distinguish between similar objects, and are not used to describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in this application, "or" indicates at least one of connected objects. For example, "A or B" covers three solutions, namely, solution 1: including A and not including B; solution 2: including B and not including A; and solution 3: including A and B. A character "/" generally indicates an "or" relationship between the associated objects.

The term "indication" in this application may be either a direct indication (or referred to as an explicit indication) or an indirect indication (or referred to as an implicit indication). The direct indication can be understood as that a sender clearly informs a receiver of specific information, an operation required to be performed, a request result, or the like in a sent indication; and the indirect indication can be understood as that the receiver determines corresponding information based on an indication sent by the sender, or makes a determination and determines the operation required to be performed, the request result, or the like based on a determination result.

It should be noted that technologies described in the embodiments of this application are not limited to a Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), or other systems. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are in most of the following descriptions, but these technologies can also be applied to a system other than the NR system, for example, a 6th generation (6th Generation, 6G) communication system.

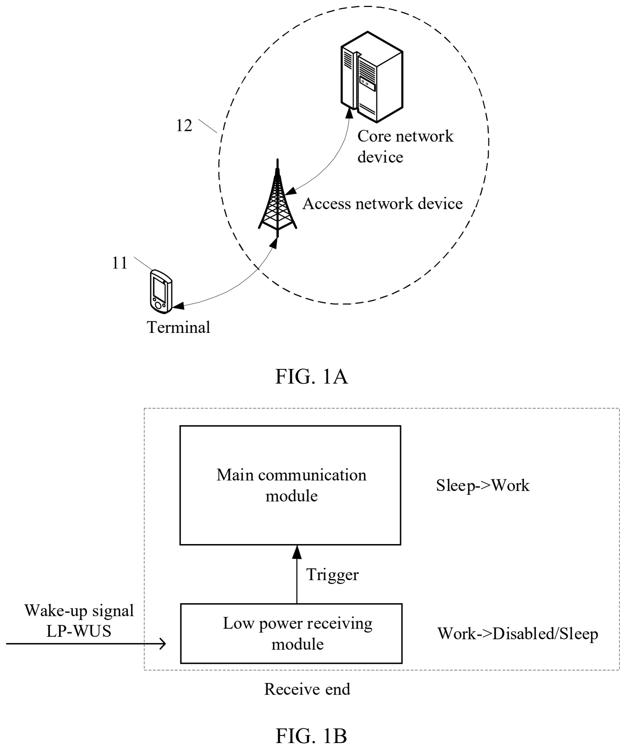

FIG. 1A is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (household devices with wireless communication functions, such as a refrigerator, a television, a washing machine, or furniture), a game console, a personal computer (Personal Computer, PC), a teller machine, or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. As long as a same technical effect is achieved, the base station is not limited to a specified technical term. It should be noted that, in the embodiments of this application, only a base station in an NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application service discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

The LP-WUS is a low power wake-up signal, and is received by a low power receiver to wake up the main communication module, and the like. As shown in FIG. 1B, the terminal includes two modules. A first module is a main communication module (Main Radio), configured for transmitting and receiving of mobile communication data, and a second module is a low power receiving module (Low-Power Radio), configured to receive the wake-up signal. In an energy-saving state, the terminal enables the low power receiving module to monitor the LP-WUS, and the main communication module is in a sleep state or a disabled state. When downlink data arrives, the network side device may transmit an LP-WUS to the terminal. After monitoring the LP-WUS by using the low power receiving module, the terminal determines whether to wake up the main communication module or trigger the main communication module from being disabled to being enabled.

The network side may transmit paging messages to terminals in an idle state, an inactive state, and a connected state, and a paging process may be triggered by the core network to inform a terminal of receiving a paging request; or the paging process is triggered by an eNodeB/gNB, to inform information such as system information update.

The network side may transmit a paging early indication (Paging early indication, PEI) to the terminals in the idle state and the inactive state. The paging early indication is used for informing the terminal whether there may be a paging message related to the terminal.

If the paging indication is detected or the paging indication is true, it indicates that the terminal related to the paging indication may have a paging message on a next paging occasion (Paging Occasion, PO). The terminal monitors the next PO.

If the paging indication is not detected or the paging indication is false, it indicates that the corresponding terminal has no related paging message on the paging occasion (PO). The terminal does not monitor the next PO to save power.

In the related art, the terminal receives a paging message by using the main communication module. For example, on the paging occasion (PO), the terminal first monitors whether a physical downlink control channel (Physical Downlink Control Channel, PDCCH) carries a paging radio network temporary identity (Paging Radio Network Temporary Identity, P-RNTI), to determine whether a corresponding physical downlink shared channel (Physical Downlink Shared Channel, PDSCH) carries a paging message. The core network configures the base station based on the paging message and transmits the paging message to the base station. Paging is configured and paging information is transmitted between base stations. Alternatively, the terminal receives the paging indication by using the main communication module (including the main receiver). In the above scheme, the main communication module needs to be in an awake state, which is not conducive to power saving of the terminal.

With reference to the accompanying drawings, a paging method provided in the embodiments of this application is described in detail by using some embodiments and application scenarios thereof.

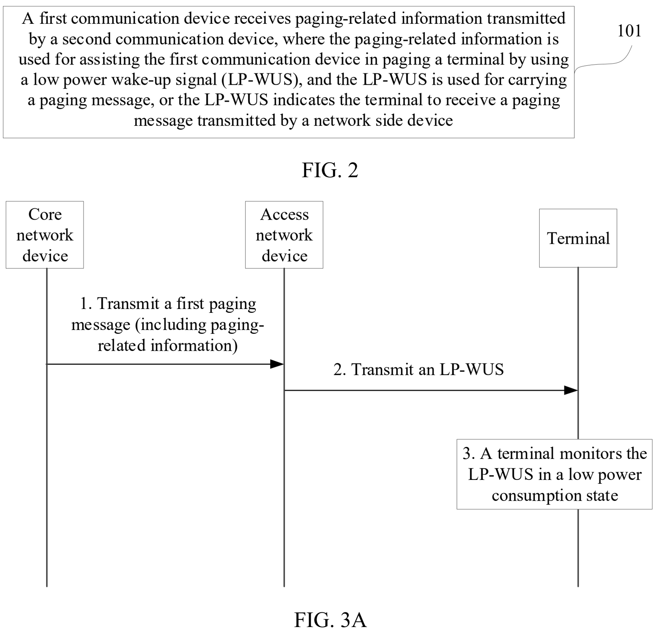

Referring to FIG. 2, an embodiment of this application provides a paging method, applied to a first communication device. The first communication device includes but is not limited to a RAN network element, and the method includes the following steps.

Step 101: A first communication device receives paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

Specifically, the second communication device includes but is not limited to a CN network element (such as SMF or PCF) or a RAN network element. The second communication device transmits the paging-related information to the first communication device, that is, configuring the paging-related information corresponding to the LP-WUS for the first communication device, so that the first communication device pages the terminal by using the low power wake-up signal (LP-WUS), where the LP-WUS may be used for carrying a paging message, that is, the LP-WUS may be used as the paging message, or the LP-WUS may indicate the terminal to receive the paging message transmitted by the network side device.

Alternatively, the paging-related information may also be referred to as LP-WUS assistance information.

In a case that the first communication device pages the terminal by using the low power wake-up signal (LP-WUS), the terminal may receive the LP-WUS by using a low power wake-up receiving module, thereby reducing energy consumption and achieving the purpose of power saving.

According to the method of this application, the first communication device receives paging-related information transmitted by the second communication device, where the paging-related information is used for assisting the first communication device in paging the terminal by using a low power wake-up signal (LP-WUS), and the LP-WUS is used for carrying a paging message, or the LP-WUS indicates the terminal to receive a paging message transmitted by the network side device. The terminal may receive the LP-WUS by using the low power wake-up receiving module, thereby reducing energy consumption and achieving the purpose of power saving.

In an embodiment, as shown in FIG. 3A, in a case that the second communication device is a core network device, step 101 may be implemented in the following manners:

receiving, by the first communication device, a first paging message transmitted by the second communication device, where the first paging message includes the paging-related information, the first paging message is used for paging the terminal in at least one first target area, and the paging-related information includes at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause;
the LP-WUS ID is a unique identifier of the terminal in the target area; and
the first target area information includes target area information for paging the terminal by using the LP-WUS.

Specifically, the second communication device is a core network device, such as an AMF, and the first paging message is used for paging the terminal in at least one first target area. Optionally, the first target area information includes at least one of the following:

an LP-WUS area, where the LP-WUS area represents an area that supports an LP-WUS capability or uses the LP-WUS to transmit paging indication information or a paging message;
a tracking area;
a cell; and
a low power synchronization signal (Low Power Synchronization Signal, LP-SS) identifier (ID) list, where the LP-SS identifier (ID) is used for identifying the LP-WUS area, that is, an access network device may transmit an LP-SS signal in an LP-WUS area corresponding to the LP-SS identifier (ID). Optionally, the LP-SS signal indicates the LP-SS identifier.

Specifically, the LP-WUS area supports the LP-WUS capability, which refers to that the network side device may transmit the paging indication information or the paging message by transmitting the LP-WUS in the LP-WUS area.

The first target area information includes, for example, a tracking area list, a cell list, an LP-WUS area list, an LP-SS ID list, and the like. For example, the access network device transmits an LP-SS, and the terminal determines an LP-SS ID based on the LP-SS. In an implementation, a plurality of cells serve as a first target area, and a transmitted LP-SS carries same LP-SS IDs, so that the terminal may continue to monitor the LP-WUS when crossing cells in the same first target area. This may reduce cell reselection performed by the terminal and is conducive to power saving of the terminal.

Optionally, a terminal paging identifier includes an LP-WUS identifier (ID) and/or a terminal ID (for example, a 5G S-temporary mobile subscription identifier (5G S-Temporary Mobile Subscription Identifier, 5G-S-TMSI)).

The LP-WUS ID is a unique ID of the terminal in the first target area.

The LP-WUS ID may be included in the information carried in the first paging message. For example, the first paging message includes the LP-WUS ID, which indicates that the terminal corresponding to the LP-WUS ID is paged.

Alternatively, the LP-WUS and the LP-WUS ID are in a one-to-one mapping, and when the terminal receives a corresponding LP-WUS, it indicates that it is paged.

Optionally, the network side device provides a terminal paging identifier corresponding to a terminal ID such as 5G-S-TMSI. The network side device transmits a corresponding LP-WUS based on the terminal identifier of the terminal, to indicate the terminal to receive paging. This is helpful for paging the terminal in a one-to-one manner and reducing a probability of false wake-up, and is conducive to power saving of the terminal.

Optionally, the LP-WUS group information includes at least one of the following:
an LP-WUS group identifier and a number of LP-WUS groups.

Specifically, the LP-WUS group information (which may be referred to as LP-WUS group Information) may be used by the access network device to determine an LP-WUS group for paging the terminal, and includes at least one of the following:

an LP-WUS group identifier, indicating an LP-WUS group allocated to the terminal by the network side device. For example, the core network device configures an LP-WUS group identifier for the terminal by using a non-access stratum (Non-Access Stratum, NAS) message or a radio resource control (Radio Resource Control, RRC) message. Alternatively, for RAN paging, an anchor (Anchor) base station configures an LP-WUS group identifier for the terminal; and

a number of LP-WUS groups. For example, when grouping based on the terminal ID, the base station can calculate the LP-WUS group identifier of the terminal based on the number of LP-WUS groups.

After determining the LP-WUS group of the terminal, the base station transmits an LP-WUS corresponding to the LP-WUS group, and indicates the terminal in the LP-WUS group to receive paging. Compared with the scheme in which each terminal has an independent LP-WUS identifier, the paging indication based on the LP-WUS group may reduce a number of LP-WUSs. Compared with a case in which all terminals monitoring paging on the same paging occasion are not grouped, this can reduce a false wake-up rate, and is conducive to power saving of the terminal.

Optionally, the LP-WUS DRX information includes time information of discontinuously transmitting the LP-WUS to the terminal, and the time information includes at least one of the following: a DRX cycle, on-duration (On-Duration), and a start transmission time of the LP-WUS.

Specifically, by discontinuously transmitting the LP-WUS, the terminal may reduce duration of monitoring the LP-WUS, thereby contributing to energy saving of the terminal. Optionally, LP-WUS DRX is terminal-specific (Specific) LP-WUS DRX. The network side device may configure LP-WUS DRX for the terminal based on terminal characteristics or service requirements. Different terminals may have different LP-WUS DRX, which helps the terminal to save power.

Optionally, the paging priority includes a CN paging priority and/or a RAN paging priority.

The CN paging priority is used for determining a terminal or a paging message with a higher priority. The network side device may preferentially transmit an LP-WUS of a high-priority terminal or paging message, or the network side device may further arrange a PO location in which the terminal monitors paging, or a PO location for carrying the paging message. The PO location may be a location close to a receiving location of the LP-WUS, to reduce a delay of the terminal in receiving paging. Optionally, the LP-WUS indicates PO location information.

The base station may use the RAN paging priority to determine a paging priority of a terminal in the inactive RRC_INACTIVE state.

Optionally, the terminal radio capability for LP-WUS paging includes at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

Specifically, a UE radio capability for LP-WUS paging may be referred to as UE LP-WUS Radio Capability for Paging. For example, the base station determines whether to and how to transmit the LP-WUS based on the terminal radio capability for LP-WUS paging of the terminal. The terminal radio capability for LP-WUS paging includes at least one of the following:

an LP-WUS capability of the terminal (namely, whether to support paging based on the LP-WUS); and if the terminal supports paging based on the LP-WUS, the base station transmits the LP-WUS to page the terminal. If the terminal does not support paging based on the LP-WUS, the base station does not page by using the LP-WUS, for example, transmitting a conventional paging message. The terminal receives the conventional paging message by using the main communication module;

an LP-WUS DRX capability, that is, whether to support LP-WUS DRX;

a capability of continuously monitoring the LP-WUS (also referred to as Always ON monitoring capability), where for the terminal that supports continuously monitoring the LP-WUS, the network side device may transmit the LP-WUS at any time. Otherwise, the network side device transmits the LP-WUS based on LP-WUS DRX;

a capability of simultaneously monitoring the LP-WUS and a conventional paging signal (legacy paging), that is, the terminal monitors the LP-WUS by using the low power module, and may fully or partially monitor a target paging message or a target paging indication by using the main communication module, where the target paging message is a paging message on some or all POs. The paging indication PEI is a paging indication corresponding to some or all POs. If the terminal supports the capability of simultaneously monitoring the LP-WUS and the legacy paging, the network side device may select to page the terminal by using the LP-WUS, or page the terminal by using a target paging message or a target paging indication PEI; and

a low power synchronization signal (LP-SS) measurement capability (radio resource management (Radio Resource Management, RRM) capability), that is, a capability that the terminal supports performing RRM measurement based on a low power synchronization signal. The advantage is that the terminal can determine a strength of a downlink signal based on measurement of the low power synchronization signal, to avoid a detection failure of the LP-WUS.

Optionally, the assistance data for LP-WUS paging includes at least one of the following: information of a first target area visited by the terminal, information of a cell that is visited, information of a first target area that is not visited, information of a cell that is not visited, and a time of stay in a first target area.

Specifically, the assistance data for LP-WUS paging (Assistance Data for LP-WUS Paging) includes information of a first target area that is visited and/or not visited by the terminal, a time of stay in a first target area, and the like. For example, a tracking area (Tracking Area, TA) may include one or more first target areas. For example, information of a first target area visited recently is presented first, which is conducive to paging the terminal as soon as possible.

Optionally, the LP-WUS paging cause indicates the first communication device to carry a paging cause in the LP-WUS; and the paging cause includes at least one of the following: a voice service, a data service, system information change, and emergency broadcast.

Specifically, the LP-WUS paging cause (Paging Cause) is used for the network side device to indicate the base station to carry a paging cause in the LP-WUS. The paging cause includes a voice service, a data service, system information change, emergency broadcast (such as an earthquake and tsunami warning system (Earthquake and Tsunami Warning System, ETWS)), and the like. Based on the paging cause carried in the LP-WUS, the terminal determines whether to accept the paging, or whether to receive a paging message corresponding to the LP-WUS, or receive the system information or the emergency broadcast. For example, in a case that one card of a multi universal subscriber identity module (Multi Universal Subscriber Identity Module, MUSIM) terminal is used for the data service, the other card monitors LP-WUS paging, and only accepts paging with a paging cause of voice. According to this method, the terminal may avoid waking up the main receiving module because of receiving an unacceptable paging message, and the terminal has low implementation complexity and low energy consumption. This is conducive to power saving of the terminal.

Optionally, the terminal has a same LP-WUS configuration in the first target area; and the LP-WUS configuration includes a parameter of the LP-WUS.

For example, the terminal has a same LP-WUS configuration in a plurality of LP-WUS areas within the first target area.

Optionally, a plurality of cells of a same terminal in a target area have a same LP-WUS configuration. The LP-WUS configuration is used for configuring the parameter of the LP-WUS; and

the advantage is that the terminal may monitor the LP-WUS based on the same LP-WUS configuration in the same target area, and when moving across cells in the target area, the terminal may perform cell reselection without waking up the main communication module, or receive system information to obtain a corresponding LP-WUS configuration. The energy consumption of the terminal is low, which helps the terminal to save power.

Optionally, the LP-WUS includes a preamble sequence (Preamble) and/or payload data; and

the use of Preamble includes but is not limited to detection, synchronization, and data rate determination of the LP-WUS, and carrying other information.

The LP-WUS configuration includes at least one of the following:

a configuration parameter corresponding to the preamble;
a configuration parameter of the payload data;
a time domain resource of the LP-WUS;
a frequency domain resource of the LP-WUS;
a transmission period parameter of the LP-WUS;
an LP-WUS identifier (ID);
an LP-WUS group identifier;
a number of LP-WUS groups; and
a number of LP-WUSs.

Optionally, the configuration parameter corresponding to the preamble includes at least one of the following:

an index of the preamble;
a number of preambles;
a number of LP-WUSs;
a length of the preamble, for example, a time length X us, and a character length such as Y bit;
first indication information;
second indication information; and
at least one preamble type.

The first indication information indicates that the length of the preamble is fixed or variable; and the second indication information indicates the first terminal to determine the length of the preamble based on the detected preamble.

Optionally, lengths of Preamble may be different, and amounts of carried information may also be different.

Optionally, different Preamble types have different character lengths or time lengths. Optionally, in a case of a plurality of Preamble types, a specific parameter such as number, length, and the like may be configured based on the Preamble type.

The terminal monitors an LP-WUS corresponding to the LP-WUS ID.

Optionally, the configuration parameter of the payload data includes at least one of the following:

a time length of the payload data;
third indication information;
a data rate of the payload data;
a length of data carried by the payload data;
fourth indication information; and
at least one payload data type.

The third indication information indicates that the time length of the payload data is fixed or variable; and the fourth indication information indicates that the length of data carried by the payload data is fixed or variable.

Optionally, different types of the payload data (Payload Data) have different time lengths or data lengths or data rates; and in a case of a plurality of types, specific parameters such as length are configured based on the plurality of types.

Optionally, the time domain resource includes X time domain resources, and the frequency domain resource includes Y frequency domain resources, where both X and Y are positive integers;

types of preambles corresponding to different time domain resources are different, or indexes of preambles corresponding to different time domain resources are different, or terminal groups corresponding to different time domain resources are different; and

types of preambles corresponding to different frequency domain resources are different, or indexes of preambles corresponding to different frequency domain resources are different, or terminal groups corresponding to different frequency domain resources are different.

Optionally, the transmission period parameter includes at least one of the following:
a discontinuous reception (DRX) cycle of the LP-WUS, on-duration of the LP-WUS, and a start transmission time of the LP-WUS.

The LP-WUS configuration includes the transmission period parameter, which is convenient for the network side device to transmit the LP-WUS with the DRX previously configured for the terminal.

Optionally, the LP-WUS group identifier includes at least one of the following:
an identifier calculated based on a terminal identifier, and an identifier configured by the network side device.

The LP-WUS group information includes at least one of the following:
an LP-WUS group identifier and a number of LP-WUS groups.

Specifically, the LP-WUS group identifier indicates the terminal to detect a corresponding LP-WUS. The LP-WUS group identifier may be configured by the network side device, for example, the core network device configures the LP-WUS group identifier for the terminal by using an NAS message.

The number of LP-WUS groups indicates how many LP-WUS groups there are in the first target area.

For example, the LP-WUS group identifier is calculated based on the terminal ID (UE_ID). UE_ID is LP-WUS ID (LP-WUS ID is a unique ID of the terminal in the first target area), or some or all bits of 5G-S-TMSI.

For example, the LP-WUS group identifier (such as LP-WUS sequence number LP-WUS_index) is determined by using the following formula:

$$\text{LP-WUS group identifier } LP\text{-}WUS\_index = UE\_ID \bmod N,$$

where
N is an integer greater than 0, and is the number of LP-WUSs.

In the foregoing implementation, terminals are grouped based on UE_ID, and then a terminal in an LP-WUS group corresponding to an LP-WUS group identifier is paged by using the LP-WUS. Transmitting the corresponding LP-WUS based on the LP-WUS group can avoid waking up terminals on the whole PO to a certain extent. This reduces a false wake-up rate, and is conducive to power saving of the terminal.

For example, the LP-WUS group identifier is determined by using the following formula:

$$\text{LP-WUS group identifier} = \text{LP-WUS ID mod N, }^,$$

where

N is an integer greater than 0, and is the number of LP-WUSs or the number of LP-WUS groups. LP-WUS ID is configured by the network side device. One LP-WUS group corresponds to one LP-WUS.

In the foregoing implementation, the LP-WUS group is paged by using the LP-WUS corresponding to the LP-WUS group identifier, which helps to reduce a number of LP-WUSs required by the system and reduce a false wake-up probability.

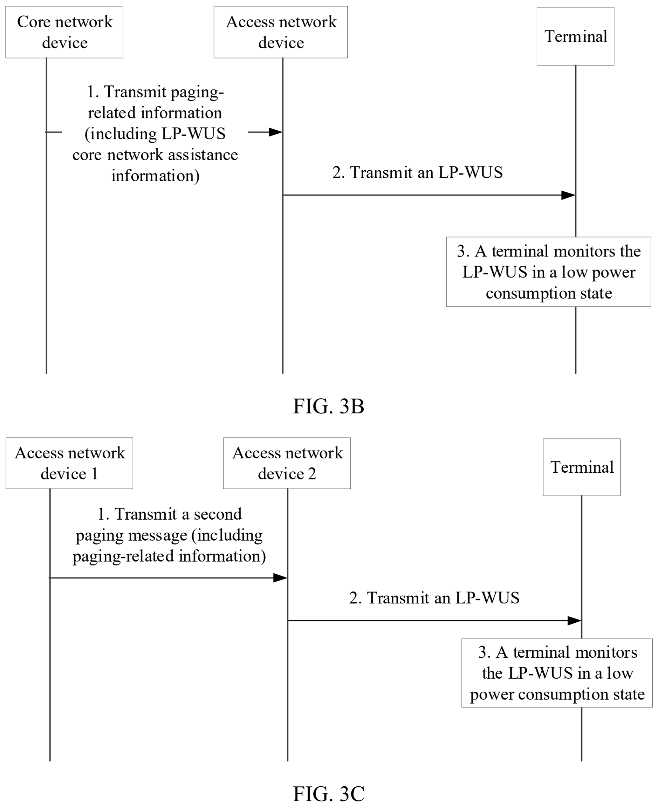

In another embodiment, as shown in FIG. 3B, the second communication device is a core network device, the paging-related information includes LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

Optionally, the LP-WUS core network assistance information includes at least one of the following:

indicating whether to paging the terminal by using the LP-WUS; and
at least one of the paging-related information.

Optionally, the LP-WUS core network assistance information may be referred to as LP-WUS Core Network Assistance Information.

Specifically, the low power consumption state indicates that the terminal is in the state of monitoring the LP-WUS, and in the low power consumption state, the terminal monitors information transmitted by the network side device or measures a signal of the network side device by using a low power communication module (such as a low power receiver). The terminal optionally disables the main communication module, or the main communication module enters a sleep state, to achieve a power-saving effect.

Optionally, the core network device in this embodiment may be an AMF.

Optionally, the LP-WUS core network assistance information is transmitted in at least one of the following procedures:

an initial context setup procedure, a UE context modification procedure, a handover procedure, and a path switch procedure.

The initial context setup procedure, for example, carrying the LP-WUS core network assistance information by using an INITIAL CONTEXT SETUP REQUEST message;

the UE context modification procedure, for example, carrying the LP-WUS core network assistance information by using a UE CONTEXT MODIFICATION REQUEST message;
the handover procedure, for example, carrying the LP-WUS core network assistance information by using a HANDOVER REQUEST message; and
the path switch procedure, for example, carrying the LP-WUS core network assistance information by using a PATH SWITCH REQUEST message.

In the foregoing implementation, the LP-WUS core network assistance information is used for assisting the first communication device in paging a terminal in an inactive state, an idle state, or a low power consumption state by using the LP-WUS, thereby realizing the scheme of paging the terminal by using the LP-WUS. In addition, the terminal may receive the LP-WUS by using the low power wake-up receiving module, thereby reducing energy consumption and achieving the purpose of power saving.

In another embodiment, as shown in FIG. 3C, the second communication device is an access network device, and the receiving, by a first communication device, paging-related information transmitted by a second communication device includes:

receiving, by the first communication device, a second paging message transmitted by the second communication device, where the second paging message includes the paging-related information, and the second paging message is used for the second communication device to request the first communication device to page the terminal by transmitting the LP-WUS.

Optionally, both the first communication device and the second communication device are access network devices.

The second paging message is used for access network device 1 to request access network device 2 to page the terminal by transmitting the LP-WUS.

Optionally, the second paging message is used for assisting the first communication device in paging a terminal in an inactive state or a low power consumption state by using the LP-WUS.

For example, the paging-related information included in the second paging message is used for assisting the access network device in paging a terminal in an inactive (RRC INACTIVE) state or a low power consumption state by using the LP-WUS.

Optionally, the second paging message supports transmitting paging indication information by using the LP-WUS.

For example, access network device 1 is an anchor (anchor) base station.

For content included in the paging-related information, refer to the foregoing embodiment.

Optionally, the LP-WUS group information includes an LP-WUS group allocated to the terminal by access network device 1.

Optionally, the second paging message further includes at least one of the following: LP-WUS indication information, second target area information of the LP-WUS, radio access network (RAN) paging assistance data, terminal-specific LP-WUS DRX information, and paging extended discontinuous reception (eDRX) information;

the LP-WUS indication information includes at least one of the following: whether to page the terminal by using the LP-WUS; and indicating whether the terminal is allowed to monitor, in the inactive state, the LP-WUS;
the second target area information includes target area information for paging the terminal in the inactive state by using the LP-WUS;
the RAN paging assistance data includes paging attempt information of the LP-WUS; and
the paging eDRX information indicates the first communication device to transmit, based on eDRX, an LP-WUS for paging the terminal to the terminal.

Optionally, the paging attempt information includes at least one of the following:

an LP-WUS paging attempt count;
an intended number of LP-WUS paging attempts; and
a next LP-WUS paging area range, where the next LP-WUS paging area range is a paging area range of a next LP-WUS paging attempt.

The second target area includes: an LP-WUS area for RAN paging (LP-WUS Area for RAN Paging), which refers to a target area for paging the terminal in the inactive (RRC_INACTIVE) state by using the LP-WUS.

Content of LP-WUS Area for RAN Paging may be the same as first target area information. Details are not described herein again.

RAN paging assistance data (RAN Paging Assistance Data) includes paging attempt information of the LP-WUS (Paging Attempt Information of LP-WUS), such as an LP-WUS paging attempt count (LP-WUS Paging Attempt Count), and an intended number of LP-WUS paging attempts (Intended Number of LP-WUS Paging Attempts). The next LP-WUS paging area range may indicate a paging area range of a next LP-WUS paging attempt, for example, the next LP-WUS paging area range is indicated by indicating whether the paging area is changed during the next LP-WUS paging attempt.

In some embodiments, the terminal-specific LP-WUS DRX information is used for configuring the terminal-specific LP-WUS DRX.

For example, optionally, the core network device configures an LP-WUS DRX (denoted as DRX1) for the terminal; and optionally, the base station configures a base station LP-WUS DRX (RAN LP-WUS DRX, denoted as DRX2) for the terminal. Optionally, the terminal has terminal-specific DRX (UE Specific DRX for LP-WUS, denoted as DRX3). When transmitting the LP-WUS to the terminal, the base station adopts target LP-WUS DRX, where the target LP-WUS DRX is the minimum of the above three DRX values.

The paging extended discontinuous reception (eDRX) information (Paging eDRX Information) is used for the access network device to transmit the LP-WUS to the terminal based on eDRX to page the terminal.

Optionally, the terminal is in a low power consumption state; and the low power consumption state indicates that the terminal is in a state of monitoring the LP-WUS.

Specifically, the terminal monitors the LP-WUS in the low power consumption state. The network side device transmits the LP-WUS to the terminal, and the LP-WUS indicates the terminal in the low power consumption state to receive paging. In the low power consumption state, the terminal monitors information transmitted by the network side device or measures a signal of the network side device by using a low power communication module (such as a low power receiver). The terminal optionally disables the main communication module, or the main communication module enters a sleep state, to achieve a power-saving effect. Optionally, an RRC state corresponding to the terminal in the low power consumption state is an idle state or an inactive (RRC INACTIVE) state.

As shown in FIG. 3A, the method includes the following steps.

Step 1: A core network device transmits a first paging message to an access network device, where the first paging message includes paging-related information; and for details, refer to the content of the first paging message in the foregoing embodiment.

Step 2: The access network device transmits an LP-WUS to a terminal.

Step 3: The terminal monitors the LP-WUS in a low power consumption state.

As shown in FIG. 3B, the method includes the following steps.

Step 1: A core network device transmits paging-related information to an access network device, where the paging-related information includes LP-WUS core network assistance information; and for details, refer to the content of the LP-WUS core network assistance information in the foregoing embodiment.

Step 2: The access network device transmits an LP-WUS to a terminal.

Step 3: The terminal monitors the LP-WUS in a low power consumption state.

As shown in FIG. 3C, the method includes the following steps.

Step 1: Access network device 1 transmits a second paging message to access network device 2, where the second paging message includes paging-related information; and for details, refer to the content of the second paging message in the foregoing embodiment.

Step 2: Access network device 2 transmits an LP-WUS to a terminal.

Step 3: The terminal monitors the LP-WUS in a low power consumption state.

In this embodiment of this application, the paging method based on the LP-WUS supports CN Paging based on the LP-WUS, that is, the core network configures the base station to page the terminal by using the LP-WUS, and supports RAN Paging based on the LP-WUS, that is, Anchor base station configures the base station to page the terminal by using the LP-WUS. It can be configured by using the paging-related information, such as the LP-WUS assistance information. The LP-WUS configuration of the terminal is transmitted between network side devices, thereby ensuring performance of the terminal to receive paging by using the LP-WUS, and helping the terminal to save power.

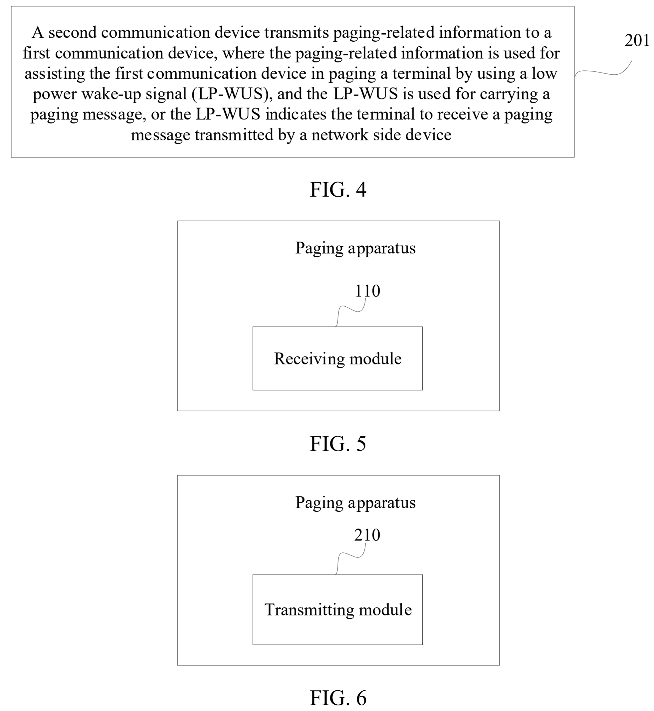

FIG. 4 is a second schematic flowchart of a paging method according to an embodiment of this application. As shown in FIG. 4, the method includes the following steps.

Step 201: A second communication device transmits paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

Optionally, the second communication device is a core network device, and the transmitting, by a second communication device, paging-related information to a first communication device includes:

transmitting, by the second communication device, a first paging message to the first communication device, where the first paging message includes the paging-related information, the first paging message is used for paging the terminal in at least one first target area, and the paging-related information includes at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause;

the LP-WUS ID is a unique identifier of the terminal in the target area; and

the first target area information includes target area information for paging the terminal by using the LP-WUS.

Optionally, the first target area information includes at least one of the following:

an LP-WUS area, where the LP-WUS area represents an area that supports an LP-WUS capability or uses the LP-WUS to transmit paging indication information or a paging message;

a tracking area;

a cell; and

a low power synchronization signal (LP-SS) identifier (ID) list, where the LP-SS identifier (ID) is used for identifying the LP-WUS area.

Optionally, the terminal has a same LP-WUS configuration in the first target area; and the LP-WUS configuration includes a parameter of the LP-WUS.

Optionally, the LP-WUS includes a preamble sequence (Preamble) and/or payload data; and the LP-WUS configuration includes at least one of the following:

a configuration parameter corresponding to the preamble;

a configuration parameter of the payload data;

a time domain resource of the LP-WUS;

a frequency domain resource of the LP-WUS;

a transmission period parameter of the LP-WUS;
an LP-WUS identifier (ID);
an LP-WUS group identifier;
a number of LP-WUS groups; and
a number of LP-WUSs.

Optionally, the transmission period parameter includes at least one of the following:
a discontinuous reception (DRX) cycle of the LP-WUS, on-duration of the LP-WUS, and a start transmission time of the LP-WUS.

Optionally, the LP-WUS ID is configured by the network side device.

Optionally, the LP-WUS group identifier includes at least one of the following:
an identifier calculated based on a terminal identifier, and an identifier configured by the network side device.

Optionally, the LP-WUS group information includes at least one of the following:
an LP-WUS group identifier and a number of LP-WUS groups.

Optionally, the LP-WUS DRX information includes time information of discontinuously transmitting the LP-WUS to the terminal, and the time information includes at least one of the following: a DRX cycle, on-duration, and a start transmission time of the LP-WUS.

Optionally, the terminal radio capability for LP-WUS paging includes at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

Optionally, the assistance data for LP-WUS paging includes at least one of the following: information of a first target area visited by the terminal, information of a cell that is visited, information of a first target area that is not visited, information of a cell that is not visited, and a time of stay in a first target area.

Optionally, the LP-WUS paging cause indicates the first communication device to carry a paging cause in the LP-WUS; and the paging cause includes at least one of the following: a voice service, a data service, system information change, and emergency broadcast.

Optionally, the second communication device is a core network device, the paging-related information includes LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

Optionally, the LP-WUS core network assistance information includes at least one of the following:

indicating whether to paging the terminal by using the LP-WUS; and
at least one of the paging-related information included in the first paging message.

Optionally, the LP-WUS core network assistance information is transmitted in at least one of the following procedures:
an initial context setup procedure, a UE context modification procedure, a handover procedure, and a path switch procedure.

Optionally, the second communication device is an access network device, and the transmitting, by a second communication device, paging-related information to a first communication device includes:
transmitting, by the second communication device, a second paging message to the first communication device, where the second paging message includes the paging-related information, and the second paging message is used for the second communication device to request the first communication device to page the terminal by transmitting the LP-WUS.

Optionally, the second paging message is used for assisting the first communication device in paging a terminal in an inactive state or a low power consumption state by using the LP-WUS.

Optionally, the second paging message further includes at least one of the following: LP-WUS indication information, second target area information of the LP-WUS, radio access network (RAN) paging assistance data, terminal-specific LP-WUS DRX information, and paging extended discontinuous reception (eDRX) information;

the LP-WUS indication information includes at least one of the following: whether to page the terminal by using the LP-WUS; and indicating whether the terminal is allowed to monitor, in the inactive state, the LP-WUS;
the second target area information includes target area information for paging the terminal in the inactive state by using the LP-WUS;
the RAN paging assistance data includes paging attempt information of the LP-WUS; and
the paging eDRX information indicates the first communication device to transmit, based on eDRX, an LP-WUS for paging the terminal to the terminal.

Optionally, the paging attempt information includes at least one of the following:

an LP-WUS paging attempt count;
an intended number of LP-WUS paging attempts; and
a next LP-WUS paging area range, where the next LP-WUS paging area range is a paging area range of a next LP-WUS paging attempt.

Optionally, the terminal is in a low power consumption state; and the low power consumption state indicates that the terminal is in a state of monitoring the LP-WUS.

A specific implementation process and technical effects of the method in this embodiment are the same as those of the method embodiment on the first communication device side. For details, refer to the detailed description in the embodiment on the first communication device side. Details are not described herein again.

The paging method provided in this embodiment of this application may be executed by a paging apparatus. In this embodiment of this application, the paging apparatus provided in an embodiment of this application is described by taking that the paging apparatus performs the paging method as an example.

FIG. 5 is a first schematic diagram of a structure of a paging apparatus according to an embodiment of this application. As shown in FIG. 5, the paging apparatus includes:

a receiving module 110, configured to receive paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a message of a network side device.

Optionally, the second communication device is a core network device, and the receiving module 110 is specifically configured to:

receive a first paging message transmitted by the second communication device, where the first paging message includes the paging-related information, the first paging message is used for paging the terminal in at least one first target area, and the paging-related information includes at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause;
the LP-WUS ID is a unique identifier of the terminal in the target area; and
the first target area information includes target area information for paging the terminal by using the LP-WUS.

Optionally, the first target area information includes at least one of the following:

an LP-WUS area, where the LP-WUS area represents an area that supports an LP-WUS capability or uses the LP-WUS to transmit paging indication information or a paging message;
a tracking area;
a cell; and
a low power synchronization signal (LP-SS) identifier (ID) list, where the LP-SS identifier (ID) is used for identifying the LP-WUS area.

Optionally, the terminal has a same LP-WUS configuration in the first target area; and the LP-WUS configuration includes a parameter of the LP-WUS.

Optionally, the LP-WUS includes a preamble sequence (Preamble) and/or payload data; and the LP-WUS configuration includes at least one of the following:

a configuration parameter corresponding to the preamble;
a configuration parameter of the payload data;
a time domain resource of the LP-WUS;
a frequency domain resource of the LP-WUS;
a transmission period parameter of the LP-WUS;
an LP-WUS identifier (ID);
an LP-WUS group identifier;
a number of LP-WUS groups; and
a number of LP-WUSs.

Optionally, the transmission period parameter includes at least one of the following:

a discontinuous reception (DRX) cycle of the LP-WUS, on-duration of the LP-WUS, and a start transmission time of the LP-WUS.

Optionally, the LP-WUS ID is configured by the network side device.

Optionally, the LP-WUS group identifier includes at least one of the following:
an identifier calculated based on a terminal identifier, and an identifier configured by the network side device.

Optionally, the LP-WUS group information includes at least one of the following:
an LP-WUS group identifier and a number of LP-WUS groups.

Optionally, the LP-WUS DRX information includes time information of discontinuously transmitting the LP-WUS to the terminal, and the time information includes at least one of the following: a DRX cycle, on-duration, and a start transmission time of the LP-WUS.

Optionally, the terminal radio capability for LP-WUS paging includes at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

Optionally, the assistance data for LP-WUS paging includes at least one of the following: information of a first target area visited by the terminal, information of a cell that is visited, information of a first target area that is not visited, information of a cell that is not visited, and a time of stay in a first target area.

Optionally, the LP-WUS paging cause indicates the first communication device to carry a paging cause in the LP-WUS; and the paging cause includes at least one of the following: a voice service, a data service, system information change, and emergency broadcast.

Optionally, the second communication device is a core network device, the paging-related information includes LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

Optionally, the LP-WUS core network assistance information includes at least one of the following:

indicating whether to paging the terminal by using the LP-WUS; and
at least one of the paging-related information included in the first paging message.

Optionally, the LP-WUS core network assistance information is transmitted in at least one of the following procedures:
an initial context setup procedure, a UE context modification procedure, a handover procedure, and a path switch procedure.

Optionally, the second communication device is an access network device, and the receiving module 110 is specifically configured to:
receive a second paging message transmitted by the second communication device, where the second paging message includes the paging-related information, and the second paging message is used for the second communication device to request the first communication device to page the terminal by transmitting the LP-WUS.

Optionally, the second paging message is used for assisting the first communication device in paging a terminal in an inactive state or a low power consumption state by using the LP-WUS.

Optionally, the second paging message further includes at least one of the following: LP-WUS indication information, second target area information of the LP-WUS, radio access network (RAN) paging assistance data, terminal-specific LP-WUS DRX information, and paging extended discontinuous reception (eDRX) information;

the LP-WUS indication information includes at least one of the following: whether to page the terminal by using the LP-WUS; and indicating whether the terminal is allowed to monitor, in the inactive state, the LP-WUS;
the second target area information includes target area information for paging the terminal in the inactive state by using the LP-WUS;
the RAN paging assistance data includes paging attempt information of the LP-WUS; and
the paging eDRX information indicates the first communication device to transmit, based on eDRX, an LP-WUS for paging the terminal to the terminal.

Optionally, the paging attempt information includes at least one of the following:

an LP-WUS paging attempt count;
an intended number of LP-WUS paging attempts; and
a next LP-WUS paging area range, where the next LP-WUS paging area range is a paging area range of a next LP-WUS paging attempt.

Optionally, the terminal is in a low power consumption state; and the low power consumption state indicates that the terminal is in a state of monitoring the LP-WUS.

The apparatus in this embodiment may be configured to perform the method in any one of the foregoing method embodiments on the first communication device side. A specific implementation process and technical effects of the apparatus are the same as those of the method embodiments on the first communication device side. For details, refer to the detailed description in the embodiments on the first communication device side. Details are not described herein again.

FIG. 6 is a second schematic diagram of a structure of a paging apparatus according to an embodiment of this application. As shown in FIG. 6, the paging apparatus includes:

a transmitting module 210, configured to transmit paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a message of a network side device.

Optionally, the second communication device is a core network device, and the transmitting module 210 is specifically configured to:

transmit a first paging message to the first communication device, where the first paging message includes the paging-related information, the first paging message is used for paging the terminal in at least one first target area, and the paging-related information includes at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause;

the LP-WUS ID is a unique identifier of the terminal in the target area; and

the first target area information includes target area information for paging the terminal by using the LP-WUS.

Optionally, the first target area information includes at least one of the following:

an LP-WUS area, where the LP-WUS area represents an area that supports an LP-WUS capability or uses the LP-WUS to transmit paging indication information or a paging message;

a tracking area;

a cell; and

a low power synchronization signal (LP-SS) identifier (ID) list, where the LP-SS identifier (ID) is used for identifying the LP-WUS area.

Optionally, the terminal has a same LP-WUS configuration in the first target area; and the LP-WUS configuration includes a parameter of the LP-WUS.

Optionally, the LP-WUS includes a preamble sequence (Preamble) and/or payload data; and the LP-WUS configuration includes at least one of the following:

a configuration parameter corresponding to the preamble;

a configuration parameter of the payload data;

a time domain resource of the LP-WUS;

a frequency domain resource of the LP-WUS;

a transmission period parameter of the LP-WUS;

an LP-WUS identifier (ID);

an LP-WUS group identifier;

a number of LP-WUS groups; and

a number of LP-WUSs.

Optionally, the transmission period parameter includes at least one of the following:

a discontinuous reception (DRX) cycle of the LP-WUS, on-duration of the LP-WUS, and a start transmission time of the LP-WUS.

Optionally, the LP-WUS ID is configured by the network side device.

Optionally, the LP-WUS group identifier includes at least one of the following:

an identifier calculated based on a terminal identifier, and an identifier configured by the network side device.

Optionally, the LP-WUS group information includes at least one of the following:

an LP-WUS group identifier and a number of LP-WUS groups.

Optionally, the LP-WUS DRX information includes time information of discontinuously transmitting the LP-WUS to the terminal, and the time information includes at least one of the following: a DRX cycle, on-duration, and a start transmission time of the LP-WUS.

Optionally, the terminal radio capability for LP-WUS paging includes at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

Optionally, the assistance data for LP-WUS paging includes at least one of the following: information of a first target area visited by the terminal, information of a cell that is visited, information of a first target area that is not visited, information of a cell that is not visited, and a time of stay in a first target area.

Optionally, the LP-WUS paging cause indicates the first communication device to carry a paging cause in the LP-WUS; and the paging cause includes at least one of the following: a voice service, a data service, system information change, and emergency broadcast.

Optionally, the second communication device is a core network device, the paging-related information includes LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

Optionally, the LP-WUS core network assistance information includes at least one of the following:

indicating whether to paging the terminal by using the LP-WUS; and
at least one of the paging-related information included in the first paging message.

Optionally, the LP-WUS core network assistance information is transmitted in at least one of the following procedures:
an initial context setup procedure, a UE context modification procedure, a handover procedure, and a path switch procedure.

Optionally, the second communication device is an access network device, and the transmitting module 210 is specifically configured to:
transmit a second paging message to the first communication device, where the second paging message includes the paging-related information, and the second paging message is used for the second communication device to request the first communication device to page the terminal by transmitting the LP-WUS.

Optionally, the second paging message is used for assisting the first communication device in paging a terminal in an inactive state or a low power consumption state by using the LP-WUS.

Optionally, the second paging message further includes at least one of the following: LP-WUS indication information, second target area information of the LP-WUS, radio access network (RAN) paging assistance data, terminal-specific LP-WUS DRX information, and paging extended discontinuous reception (eDRX) information;

the LP-WUS indication information includes at least one of the following: whether to page the terminal by using the LP-WUS; and indicating whether the terminal is allowed to monitor, in the inactive state, the LP-WUS;
the second target area information includes target area information for paging the terminal in the inactive state by using the LP-WUS;
the RAN paging assistance data includes paging attempt information of the LP-WUS; and
the paging eDRX information indicates the first communication device to transmit, based on eDRX, an LP-WUS for paging the terminal to the terminal.

Optionally, the paging attempt information includes at least one of the following:

an LP-WUS paging attempt count;
an intended number of LP-WUS paging attempts; and
a next LP-WUS paging area range, where the next LP-WUS paging area range is a paging area range of a next LP-WUS paging attempt.

Optionally, the terminal is in a low power consumption state; and the low power consumption state indicates that the terminal is in a state of monitoring the LP-WUS.

The apparatus in this embodiment may be configured to perform the method in any one of the foregoing method embodiments on the second communication device side. A specific implementation process and technical effects of the apparatus are the same as those of the method embodiments on the second communication device side. For details, refer to the detailed description in the embodiments on the second communication device side. Details are not described herein again.

The paging apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The paging apparatus provided in this embodiment of this application can implement the processes implemented in the method embodiments from FIG. 2 to FIG. 4, and a same technical effect can be achieved. To avoid repetition, details are not described herein again.

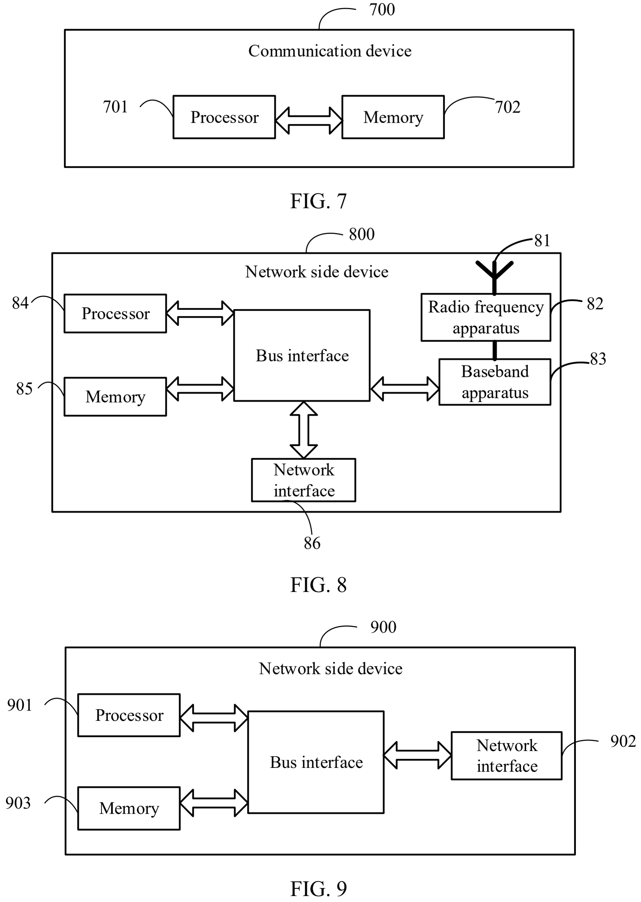

As shown in FIG. 7, an embodiment of this application further provides a communication device 700, including a processor 701 and a memory 702, and the memory 702 stores a program or an instruction that can be run on the processor 701. For example, in a case that the communication device 700 is a terminal, when the program or the instruction is executed by the processor 701, the steps of the paging method embodiments are implemented, and a same technical effect can be achieved. In a case that the communication device 700 is a network side device, when the program or the instruction is executed by the processor 701, the steps of the paging method embodiments are implemented, and a same technical effect can be achieved. To avoid repetition, details are not described herein again.

An embodiment of this application further provides a network side device, including a processor and a communication interface. The communication interface is coupled to the processor, and the processor is configured to run a program or an instruction to implement the steps of the method embodiment shown in FIG. 2 or FIG. 4. This network side device embodiment is corresponding to the foregoing method embodiment of the network side device. Each implementation process and implementation of the foregoing method embodiment may be applicable to this network side device embodiment, and a same technical effect can be achieved.

Specifically, an embodiment of this application further provides a network side device. As shown in FIG. 8, the network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes information that needs to be transmitted, and transmits processed information to the radio frequency apparatus 82. The radio frequency apparatus 82 processes the received information, and transmits processed information through the antenna 81.

In the foregoing embodiment, the method performed by the network side device may be implemented in the baseband apparatus 83. The baseband apparatus 83 includes a baseband processor.

For example, the baseband apparatus 83 may include at least one baseband board. A plurality of chips are disposed on the baseband board. As shown in FIG. 8, one chip is, for example, a baseband processor, and is connected to the memory 85 by using a bus interface, to invoke a program in the memory 85 to perform the operations of the network device shown in the foregoing method embodiment.

The network side device may further include a network interface 86, and the interface is, for example, a common public radio interface (Common Public Radio Interface, CPRI).

Specifically, the network side device 800 in this embodiment of this application further includes an instruction or a program that is stored in the memory 85 and that can be run on the processor 84. The processor 84 invokes the instruction or the program in the memory 85 to perform the method performed by the modules shown in FIG. 5 or FIG. 6, and a same technical effect is achieved. To avoid repetition, details are not described herein again.

Specifically, an embodiment of this application further provides a network side device. As shown in FIG. 9, a network side device 900 includes a processor 901, a network interface 902, and a memory 903. The network interface 902 is, for example, a common public radio interface (common public radio interface, CPRI).

Specifically, the network side device 900 in this embodiment of this application further includes an instruction or a program that is stored in the memory 903 and that can be run on the processor 901. The processor 901 invokes the instruction or the program in the memory 903 to perform the method performed by the modules shown in FIG. 5 or FIG. 6, and a same technical effect is achieved. To avoid repetition, details are not described herein again.

An embodiment of this application further provides a readable storage medium. The readable storage medium stores a program or an instruction. When the program or the instruction is executed by a processor, the processes of the paging method embodiment are implemented, and a same technical effect can be achieved. To avoid repetition, details are not provided herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application also provides a chip, where the chip includes a processor and a communication interface, and the communication interface is coupled to the processor. The processor is configured to run a program or an instruction to implement the processes of the foregoing paging method embodiment, and a same technical effect can be achieved. To avoid repetition, details are not described herein again.

It should be understood that the chip mentioned in this embodiment of this application may also be referred to as a system-level chip, a system chip, a chip system, an on-chip system chip, or the like.

An embodiment of this application further provides a computer program/program product. The computer program/program product is stored in a storage medium, the computer program/program product is executed by at least one processor to implement the processes of the paging method embodiment, and a same technical effect can be achieved. To avoid repetition, details are not described herein again.

An embodiment of this application further provides a wireless communication system, including a first communication device and a second communication device. The first communication device may be configured to perform the steps of the foregoing paging method, and the second communication device may be configured to perform the steps of the foregoing paging method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by a computer software product and a required universal hardware platform, or certainly may be implemented by using hardware. The computer software product is stored in a storage medium (for example, a ROM, a RAM, a magnetic disk, or an optical disc), and includes a plurality of instructions for instructing a terminal or a network side device to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms of implementations without departing from the purpose of this application and the protection scope of the claims, all of which fall within the protection of this application.

## Claims

1. A paging method, comprising:
   receiving, by a first communication device, paging-related information transmitted by a second communication device, wherein the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

2. The paging method according to claim 1, wherein the second communication device is a core network device, and the receiving, by a first communication device, paging-related information transmitted by a second communication device comprises:

   receiving, by the first communication device, a first paging message transmitted by the second communication device, wherein the first paging message comprises the paging-related information, the first paging message is used for paging the terminal in at least one first target area, and the paging-related information comprises at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause; the LP-WUS ID is a unique identifier of the terminal in the target area; and the first target area information comprises target area information for paging the terminal by using the LP-WUS.

3. The paging method according to claim 2, wherein
   the first target area information comprises at least one of the following:

an LP-WUS area, wherein the LP-WUS area represents an area that supports an LP-WUS capability or uses the LP-WUS to transmit paging indication information or a paging message;
a tracking area;
a cell; and
a low power synchronization signal (LP-SS) identifier (ID) list, wherein the LP-SS identifier (ID) is used for identifying the LP-WUS area.

4. The paging method according to claim 2 or 3, wherein
the terminal has a same LP-WUS configuration in the first target area; and the LP-WUS configuration comprises a parameter of the LP-WUS.

5. The paging method according to claim 4, wherein

the LP-WUS comprises a preamble sequence (Preamble) and/or payload data; and
the LP-WUS configuration comprises at least one of the following:

a configuration parameter corresponding to the preamble;
a configuration parameter of the payload data;
a time domain resource of the LP-WUS;
a frequency domain resource of the LP-WUS;
a transmission period parameter of the LP-WUS;
an LP-WUS identifier (ID);
an LP-WUS group identifier;
a number of LP-WUS groups; and
a number of LP-WUSs.

6. The paging method according to claim 5, wherein the transmission period parameter comprises at least one of the following:
a discontinuous reception (DRX) cycle of the LP-WUS, on-duration of the LP-WUS, and a start transmission time of the LP-WUS.

7. The paging method according to claim 5, wherein the LP-WUS ID is configured by the network side device.

8. The paging method according to claim 5, wherein the LP-WUS group identifier comprises at least one of the following:
an identifier calculated based on a terminal identifier, and an identifier configured by the network side device.

9. The paging method according to any one of claims 2 to 8, wherein
the LP-WUS group information comprises at least one of the following:
an LP-WUS group identifier and a number of LP-WUS groups.

10. The paging method according to any one of claims 2 to 8, wherein
the LP-WUS DRX information comprises time information of discontinuously transmitting the LP-WUS to the terminal, and the time information comprises at least one of the following: a DRX cycle, on-duration, and a start transmission time of the LP-WUS.

11. The paging method according to any one of claims 2 to 8, wherein
the terminal radio capability for LP-WUS paging comprises at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

12. The paging method according to any one of claims 2 to 8, wherein
the assistance data for LP-WUS paging comprises at least one of the following: information of a first target area visited by the terminal, information of a cell that is visited, information of a first target area that is not visited, information of a cell that is not visited, and a time of stay in a first target area.

13. The paging method according to any one of claims 2 to 8, wherein
the LP-WUS paging cause indicates the first communication device to carry a paging cause in the LP-WUS; and the paging cause comprises at least one of the following: a voice service, a data service, system information change, and emergency broadcast.

14. The paging method according to any one of claims 1 to 13, wherein the second communication device is a core network device, the paging-related information comprises LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

15. The paging method according to claim 14, wherein
the LP-WUS core network assistance information comprises at least one of the following:

> indicating whether to paging the terminal by using the LP-WUS; and
> at least one of the paging-related information comprised in the first paging message.

16. The paging method according to claim 14 or 15, wherein
the LP-WUS core network assistance information is transmitted in at least one of the following procedures:
an initial context setup procedure, a UE context modification procedure, a handover procedure, and a path switch procedure.

17. The paging method according to any one of claims 1 to 13, wherein the second communication device is an access network device, and the receiving, by a first communication device, paging-related information transmitted by a second communication device comprises:
receiving, by the first communication device, a second paging message transmitted by the second communication device, wherein the second paging message comprises the paging-related information, and the second paging message is used for the second communication device to request the first communication device to page the terminal by transmitting the LP-WUS.

18. The paging method according to claim 17, wherein
the second paging message is used for assisting the first communication device in paging a terminal in an inactive state or a low power consumption state by using the LP-WUS.

19. The paging method according to claim 18, wherein

> the second paging message further comprises at least one of the following: LP-WUS indication information, second target area information of the LP-WUS, radio access network (RAN) paging assistance data, terminal-specific LP-WUS DRX information, and paging extended discontinuous reception (eDRX) information;
> the LP-WUS indication information comprises at least one of the following: whether to page the terminal by using the LP-WUS; and indicating whether the terminal is allowed to monitor, in the inactive state, the LP-WUS;
> the second target area information comprises target area information for paging the terminal in the inactive state by using the LP-WUS;
> the RAN paging assistance data comprises paging attempt information of the LP-WUS; and
> the paging eDRX information indicates the first communication device to transmit, based on eDRX, an LP-WUS for paging the terminal to the terminal.

20. The paging method according to claim 19, wherein
the paging attempt information comprises at least one of the following:

> an LP-WUS paging attempt count;
> an intended number of LP-WUS paging attempts; and
> a next LP-WUS paging area range, wherein the next LP-WUS paging area range is a paging area range of a next LP-WUS paging attempt.

21. The paging method according to any one of claims 1 to 20, wherein
the terminal is in a low power consumption state; and the low power consumption state indicates that the terminal is in a state of monitoring the LP-WUS.

22. A paging method, comprising:
transmitting, by a second communication device, paging-related information to a first communication device, wherein the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

23. The paging method according to claim 22, wherein the second communication device is a core network device, and the transmitting, by a second communication device, paging-related information to a first communication device comprises:

transmitting, by the second communication device, a first paging message to the first communication device, wherein the first paging message comprises the paging-related information, the first paging message is used for paging the terminal in at least one first target area, and the paging-related information comprises at least one of the following: an LP-WUS identifier (ID) corresponding to the terminal, LP-WUS group information, first target area information of the LP-WUS, LP-WUS discontinuous reception (DRX) information, a paging priority, a terminal radio capability for LP-WUS paging, assistance data for LP-WUS paging, and an LP-WUS paging cause; the LP-WUS ID is a unique identifier of the terminal in the target area; and the first target area information comprises target area information for paging the terminal by using the LP-WUS.

24. The paging method according to claim 23, wherein the first target area information comprises at least one of the following:

an LP-WUS area, wherein the LP-WUS area represents an area that supports an LP-WUS capability or uses the LP-WUS to transmit paging indication information or a paging message; a tracking area; a cell; and a low power synchronization signal (LP-SS) identifier (ID) list, wherein the LP-SS identifier (ID) is used for identifying the LP-WUS area.

25. The paging method according to claim 23 or 24, wherein the terminal has a same LP-WUS configuration in the first target area; and the LP-WUS configuration comprises a parameter of the LP-WUS.

26. The paging method according to claim 25, wherein

the LP-WUS comprises a preamble sequence (Preamble) and/or payload data; and the LP-WUS configuration comprises at least one of the following:

a configuration parameter corresponding to the preamble; a configuration parameter of the payload data; a time domain resource of the LP-WUS; a frequency domain resource of the LP-WUS; a transmission period parameter of the LP-WUS; an LP-WUS identifier (ID); an LP-WUS group identifier; a number of LP-WUS groups; and a number of LP-WUSs.

27. The paging method according to claim 26, wherein the transmission period parameter comprises at least one of the following: a discontinuous reception (DRX) cycle of the LP-WUS, on-duration of the LP-WUS, and a start transmission time of the LP-WUS.

28. The paging method according to claim 26, wherein the LP-WUS ID is configured by the network side device.

29. The paging method according to claim 26, wherein the LP-WUS group identifier comprises at least one of the following: an identifier calculated based on a terminal identifier, and an identifier configured by the network side device.

30. The paging method according to any one of claims 23 to 29, wherein

the LP-WUS group information comprises at least one of the following:
an LP-WUS group identifier and a number of LP-WUS groups.

31. The paging method according to any one of claims 23 to 29, wherein
the LP-WUS DRX information comprises time information of discontinuously transmitting the LP-WUS to the terminal, and the time information comprises at least one of the following: a DRX cycle, on-duration, and a start transmission time of the LP-WUS.

32. The paging method according to any one of claims 23 to 29, wherein
the terminal radio capability for LP-WUS paging comprises at least one of the following: an LP-WUS capability of the terminal, an LP-WUS DRX capability, a capability of continuously monitoring the LP-WUS, a capability of simultaneously monitoring the LP-WUS and a conventional paging signal, and an LP-SS measurement capability.

33. The paging method according to any one of claims 23 to 29, wherein
the assistance data for LP-WUS paging comprises at least one of the following: information of a first target area visited by the terminal, information of a cell that is visited, information of a first target area that is not visited, information of a cell that is not visited, and a time of stay in a first target area.

34. The paging method according to any one of claims 23 to 29, wherein
the LP-WUS paging cause indicates the first communication device to carry a paging cause in the LP-WUS; and the paging cause comprises at least one of the following: a voice service, a data service, system information change, and emergency broadcast.

35. The paging method according to any one of claims 22 to 34, wherein the second communication device is a core network device, the paging-related information comprises LP-WUS core network assistance information, the LP-WUS core network assistance information is used for assisting the first communication device in paging a terminal in an inactive state, an idle state, or a low power consumption state by using the LP-WUS, and the low power consumption state indicates that the terminal is in a state of monitoring the LP-WUS.

36. The paging method according to claim 35, wherein
the LP-WUS core network assistance information comprises at least one of the following:

indicating whether to paging the terminal by using the LP-WUS; and
at least one of the paging-related information comprised in the first paging message.

37. The paging method according to claim 35 or 36, wherein
the LP-WUS core network assistance information is transmitted in at least one of the following procedures:
an initial context setup procedure, a UE context modification procedure, a handover procedure, and a path switch procedure.

38. The paging method according to any one of claims 22 to 34, wherein the second communication device is an access network device, and the transmitting, by a second communication device, paging-related information to a first communication device comprises:
transmitting, by the second communication device, a second paging message to the first communication device, wherein the second paging message comprises the paging-related information, and the second paging message is used for the second communication device to request the first communication device to page the terminal by transmitting the LP-WUS.

39. The paging method according to claim 38, wherein
the second paging message is used for assisting the first communication device in paging a terminal in an inactive state or a low power consumption state by using the LP-WUS.

40. The paging method according to claim 39, wherein

the second paging message further comprises at least one of the following: LP-WUS indication information, second target area information of the LP-WUS, radio access network (RAN) paging assistance data, terminal-specific LP-WUS DRX information, and paging extended discontinuous reception (eDRX) information;
the LP-WUS indication information comprises at least one of the following: whether to page the terminal by using the LP-WUS; and indicating whether the terminal is allowed to monitor, in the inactive state, the LP-WUS; the second target area information comprises target area information for paging the terminal in the inactive state by using the LP-WUS; the RAN paging assistance data comprises paging attempt information of the LP-WUS; and the paging eDRX information indicates the first communication device to transmit, based on eDRX, an LP-WUS for paging the terminal to the terminal.

41. The paging method according to claim 40, wherein the paging attempt information comprises at least one of the following:

an LP-WUS paging attempt count; an intended number of LP-WUS paging attempts; and a next LP-WUS paging area range, wherein the next LP-WUS paging area range is a paging area range of a next LP-WUS paging attempt.

42. The paging method according to any one of claims 22 to 41, wherein the terminal is in a low power consumption state; and the low power consumption state indicates that the terminal is in a state of monitoring the LP-WUS.

43. A paging apparatus, comprising: a receiving module, configured to receive paging-related information transmitted by a second communication device, wherein the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

44. A paging apparatus, comprising: a transmitting module, configured to transmit paging-related information to a first communication device, wherein the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device.

45. A first communication device, comprising a processor and a memory, wherein the memory stores a program or an instruction that can be run on the processor, and when the program or the instruction is executed by the processor, the steps of the paging method according to any one of claims 1 to 21 are implemented.

46. A second communication device, comprising a processor and a memory, wherein the memory stores a program or an instruction that can be run on the processor, and when the program or the instruction is executed by the processor, the steps of the paging method according to any one of claims 22 to 42 are implemented.

47. A readable storage medium, wherein the readable storage medium stores a program or an instruction, and when the program or the instruction is executed by a processor, the steps of the paging method according to any one of claims 1 to 21 are implemented, or the steps of the paging method according to any one of claims 22 to 42 are implemented.

FIG. 1A

Receive end

FIG. 1B

A first communication device receives paging-related information transmitted by a second communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device

101

FIG. 2

| Core network device | Access network device | Terminal |

1. Transmit a first paging message (including paging-related information)

2. Transmit an LP-WUS

3. A terminal monitors the LP-WUS in a low power consumption state

FIG. 3A

Core network device — Access network device — Terminal

1. Transmit paging-related information (including LP-WUS core network assistance information)

2. Transmit an LP-WUS

3. A terminal monitors the LP-WUS in a low power consumption state

FIG. 3B

Access network device 1 — Access network device 2 — Terminal

1. Transmit a second paging message (including paging-related information)

2. Transmit an LP-WUS

3. A terminal monitors the LP-WUS in a low power consumption state

FIG. 3C

A second communication device transmits paging-related information to a first communication device, where the paging-related information is used for assisting the first communication device in paging a terminal by using a low power wake-up signal (LP-WUS), and the LP-WUS is used for carrying a paging message, or the LP-WUS indicates the terminal to receive a paging message transmitted by a network side device

201

FIG. 4

Paging apparatus

110

Receiving module

FIG. 5

Paging apparatus

210

Transmitting module

FIG. 6

700

Communication device

701 — Processor ⟺ Memory — 702

FIG. 7

800

Network side device

84 — Processor

85 — Memory

Bus interface

81

Radio frequency apparatus — 82

Baseband apparatus — 83

Network interface

86

FIG. 8

900

Network side device

901 — Processor

903 — Memory

Bus interface

Network interface — 902

FIG. 9

## INTERNATIONAL SEARCH REPORT

| International application No. |
|---|
| **PCT/CN2024/086341** |

**A.      CLASSIFICATION OF SUBJECT MATTER**

H04L5/00(2006.01)i

According to International Patent Classification (IPC) or to both national classification and IPC

**B.      FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 承载, 携带, 低功率, 唤醒, 寻呼, 指示, bearer, carr+, low power, wake-up, paging, indicat+, information, LP, WUS

**C.      DOCUMENTS CONSIDERED TO BE RELEVANT**

| Category* | Citation of document, with indication, where appropriate, of the relevant passages | Relevant to claim No. |
|---|---|---|
| X | HUAWEI et al. "Signal design and procedure for LP-WUS" *3GPP TSG-RAN WG1 Meeting #112, R1-2300102*, 03 March 2023 (2023-03-03), sections 2.4 and 3 | 1-47 |
| A | CN 115915393 A (ZTE CORP.) 04 April 2023 (2023-04-04) entire document | 1-47 |
| A | US 2014112225 A1 (QUALCOMM, INC.) 24 April 2014 (2014-04-24) entire document | 1-47 |
| A | WO 2022266036 A1 (IDAC HOLDINGS, INC.) 22 December 2022 (2022-12-22) entire document | 1-47 |
| A | WO 2023020482 A1 (SPREADTRUM SEMICONDUCTOR (NANJING) CO., LTD.) 23 February 2023 (2023-02-23) entire document | 1-47 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2024** | **10 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086341**

| Patent document cited in search report | | | Publication date (day/month/year) | Patent family member(s) | | | Publication date (day/month/year) |
|---|---|---|---|---|---|---|---|
| CN | 115915393 | A | 04 April 2023 | WO | 2023193507 | A1 | 12 October 2023 |
| US | 2014112225 | A1 | 24 April 2014 | None | | | |
| WO | 2022266036 | A1 | 22 December 2022 | EP | 4356655 | A1 | 24 April 2024 |
| | | | | KR | 20240032842 | A | 12 March 2024 |
| | | | | CN | 117751632 | A | 22 March 2024 |
| WO | 2023020482 | A1 | 23 February 2023 | CN | 115942336 | A | 07 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310372208